# EUROPEAN PATENT SPECIFICATION

(11) **EP 3 152 129 B1**
(45) Date of publication and mention of the grant of the patent: **20.12.2023**
(21) Application number: 14893864.0
(22) Date of filing: 06.06.2014
(51) Int. Cl.: B65D 75/36, B32B 27/32, B32B 27/08, B32B 27/18, B32B 27/28, B32B 3/12, B32B 3/26, B32B 7/02, B32B 7/04

(54) **BLISTER PACKAGING COMPONENTS**
BESTANDTEILE EINER BLISTERPACKUNG
COMPOSANTS D'EMBALLAGE-COQUE

(43) Date of publication of application: 12.04.2017
(73) Proprietor: Amcor Flexibles North America, Inc., Neenah, WI 54956 (US)
(72) Inventor: PUGUH, Arthya, Neenah, WI 54956 (US); OSBORN, Christopher L., Germantown, WI 53022 (US)
(74) Representative: Vossius & Partner Patentanwälte Rechtsanwälte mbB
(86) International application number: PCT/US2014/041223
(87) International publication number: WO 2015/187174

(56) References cited:
- WO-A1-2007/104513
- WO-A1-2012/037180
- WO-A1-2012/037180
- WO-A1-2013/116445
- US-A- 5 218 049
- US-A- 5 783 273
- US-A- 5 783 273
- US-A1- 2007 212 539
- US-A1- 2007 212 539

## Description

### BACKGROUND OF THE INVENTION

The present invention relates generally to blister packaging and more particularly, to blister components for packaging packages formed from multilayer thermoplastic films where a low moisture vapor transmission rate is desired.

Blister packaging is employed widely for commercial packaging of food products, personal care products, and human health products such as pharmaceuticals, and medical devices or precision instruments. The use of this type of packaging has become widespread mainly due to the ability in incorporate suitable moisture, dust, UV and/or gas barriers into the packages when such properties are desired for maintaining the product contained therein. For example, blister packaging is extensively used in the pharmaceutical industry for packaging of medicaments or the like in capsule, lozenge, or pill form because the integrity of the medicament can be maintained through the proper selection of materials used to form the packages.

For preparing blister packages or so-called push through packages, generally a thermoplastic film is first processed by vacuum forming or pneumatic forming so as to form blisters or cavities thereon, namely portions having a predetermined contour corresponding to each specific article to be received therein. After the so-blistered film has been solidified, each blister is charged with each piece of the article to be packaged and a second or lidding film is then covered over each blister and sealed to the first film. The second lidding film is often a laminate material which can be ruptured by a simple finger-rupture or peeled off from the first film to allow access to a packaged item. Conventional materials used for forming the blistered film have included transparent plastics such as polyvinylchloride (PVC), polyvinylidene chloride (PVdC) and polychlorotrifluoroethylene (PCTFE), commonly referred to as ACLAR^{®} (Honeywell/Allied Signal). Packaging for pharmaceuticals or other moisture-sensitive article requires not only low moisture permeability but also other properties such as chemical inertness, clarity, rigidity, or uniform thickness. The use of polyvinylchloride (PVC) and polyvinylidene chloride (PVdC) have been shown to have poor and/or insufficient moisture-proofing properties required by the pharmaceutical industry. While ACLAR^{®} exhibits relatively low moisture vapor transmission, its use in blister packaging is inherently costly. Example 6 of US 5783273 A discloses a blister component laminate with the structure B/A/B. B is mixture of polypropylene and high density polyethylene, A is cyclic olefin copolymer (COC). This example however still shows a relatively high vapor permeability.

There is therefore a need in the art for improved blister packaging materials which provides sufficient moisture vapor barrier and chemical inertness properties and is aesthetically pleasing enough to present the products contained therein while being cost effective to be manufactured.

### SUMMARY OF THE INVENTION

The present invention is directed to blister components for blister packages formed from a multilayer film. As used throughout this disclosure, the term "blister component" refers to multilayer thermoplastic film or a roll of multilayer thermoplastic film both of which may be thermoformed, partially thermoformed or not thermoformed at all. In one embodiment of the present invention, the sequence of layers in the multilayer thermoplastic film of the blister component is palindromic. As used throughout this application, the term "palindromic" refers to a multilayer film, the layers of which are substantially symmetrical. Non-limiting examples of palindromic films are film or sheet having the layer sequence of configurations: A/B/A or A/B/B/A or A/C/B/C/A or A/C/D/B/D/C/A or A/D/C/D/B/D/C/D/A, etc. An example of a layer sequence configuration of a non-palindromic film would be A/B/C or A/C/B/A. A palindromic thermoplastic film may be coextruded as a symmetrical cast or blown film using coextrusion methods generally well known in the art. An alternative method of producing palindromic films is by the use of blown coextrusion of non-symmetrical film or sheet structures followed by collapsing the blown bubble around a central core layer. In one embodiment of the present invention, a non-symmetrical film having a layer sequence configuration of A/B is coextruded by blown film coextrusion techniques and collapsed upon itself.

In another embodiment of the present invention, the sequence of layers in the multilayer thermoplastic film of the blister component is non-palindromic.

In one generic embodiment, the thermoformed blister component of the present invention may be characterized as a palindromic film formed from a non-symmetrical film having a layer sequence configuration of A/B which is coextruded by blown film coextrusion techniques and collapsed upon itself to produce a layer sequence configuration of A/B/A. In this embodiment, the thermoformed blister component includes a film where layer A is an exterior layer comprising a cyclic olefin copolymer (COC) and layer B is a central core layer comprising high density polyethylene (HOPE), or a blend of a high density polyethylene, a high density polyethylene nucleation additive and optionally, a hydrocarbon resin (HOPE-Blend), a bimodal high density polyethylene having a molecular weight distribution of a low molecular weight region and a high molecular weight region (HDPE-Bimodal), or a high density polyethylene (HOPE) and has a thickness of between 50 µm to 254 µm (2 mil to 10 mil).

In an alternative generic embodiment of the present invention, the thermoformed blister component a palindromic film formed from a non-symmetrical film having a layer sequence configuration of A/C/B which is coextruded by blown film coextrusion techniques and collapsed upon itself to produce a layer sequence configuration of A/C/B/C/A. In this embodiment, layer A is an exterior layer comprising a cyclic olefin copolymer (COC), layer B is a central core layer comprising high density polyethylene (HOPE) or a blend of a high density polyethylene, a high density polyethylene nucleation additive and optionally, a hydrocarbon resin (HDPE-Blend), a bimodal high density polyethylene having a molecular weight distribution of a low molecular weight region and a high molecular weight region (HDPE-Bimodal), or a high density polyethylene (HOPE) and has a thickness of between 50 µm to 254 µm (2 mil to 10 mil), and C is an interior layer comprising a tie or adhesive material bonding layers A and B together.

In still another generic embodiment, the thermoformed blister component of the present invention may be characterized as a non-palindromic film having a layer sequence configuration of A/B/D which is coextruded by blown film coextrusion techniques and is not collapsed upon itself. In this embodiment, the thermoformed blister component includes a film where layer A is a first exterior layer comprising cyclic olefin copolymer (COC), layer B is a central core layer comprising a blend of a high density polyethylene, a high density polyethylene nucleation additive and optionally, a hydrocarbon resin (HDPE-Blend), a bimodal high density polyethylene having a molecular weight distribution of a low molecular weight region and a high molecular weight region (HDPE-Bimodal), or a high density polyethylene (HOPE) and has a thickness of between 50 µm to 254 µm (2 mil to 10 mil), and D is a second exterior layer comprising a different material than A and is selected from the group consisting of polypropylene (PP), high impact polystyrene (HIPS), general purpose polystyrene (GPPS), styrene block copolymer (SBC), polyethylene terephthalate (PET), oriented polyethylene terephthalate (OPET), amorphous polyethylene terephthalate (APET), glycol-modified polyethylene terephthalate (PETG) and polylactic acid (PLA).

It should be understood that in the above-described generic embodiments, the thermoformed blister component may include additional film layers.

The blister packages of the present invention may also include a lidding component which is heat-sealable to the exterior layer A of the blister component. In one embodiment, the lidding component comprises a thermoplastic resin heat-sealable to cyclic olefin copolymer.

### BRIEF DESCRIPTION OF THE DRAWINGS

Further features and advantages of the present invention will become apparent from the following detailed description, taken in combination with the appended drawings, in which:
FIG. 1 illustrates a schematic view of one embodiment of a blister package according to the present invention.
FIG. 2 illustrates an exploded view taken along line A-A of FIG. 1 depicting the blister and lidding components of the present invention.
FIG. 3 illustrates a cross-sectional view of one embodiment of a blister component according to the present invention,
FIG. 4 illustrates a cross-sectional view of another embodiment of a blister component according to the present invention.
FIG. 5 illustrates a cross-sectional view of one embodiment of a lidding component according to the present invention.

### DETAILED DESCRIPTION OF THE INVENTION

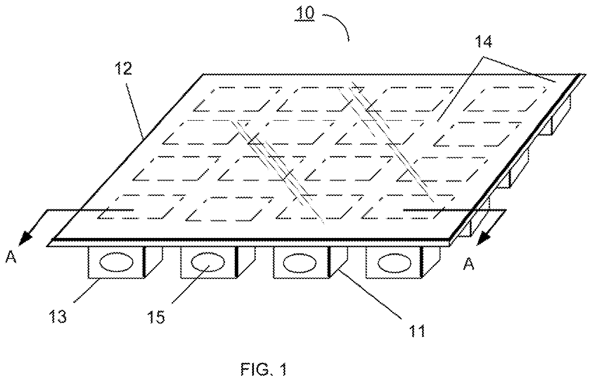

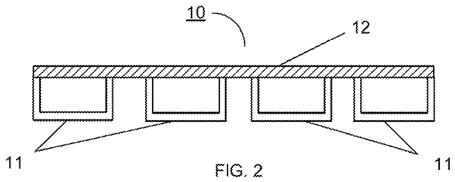

In accordance with the practice of the present invention, a representative blister package **10** as described herein is shown in FIGS. 1 and 2. Package **10** of the present invention comprises a thermoformed blister component **11** and a lidding component **12**, the former provided with one or more thermoformed pockets **13** surrounded by sealed flange regions **14**. Pocket **13** defines an individual compartment for receiving a product **15**, such as a tablet.

In accordance with an important aspect of the present invention, the thermoformed blister component **11** comprises a multilayer film. It will be appreciated that film of thermoformed blister component **11** may include any number of film layers and film layer compositions depending upon both functional and aesthetic requirements of the blister component. It is desirable that the multilayer thermoplastic film include one or more film layers which are barrier materials and substantially chemically insert when in contact with a product. The term "barrier" refers to a material that controls permeability of one or more elements through a film structure including moisture, chemicals, heat, odor and oxygen or other gases. As it relates to the present invention, a barrier material can be provided by a single film layer or multiple film layers acting individually or in concert with each other, respectively. The phrase "substantially chemically insert" refers to materials that generally are not reactive with the product with which it comes into contact with and does not leech chemical ingredients into the product with which it comes into contact. Preferably, thermoformed blister component **11** comprises a multilayer film which provides an average water vapor transmission rate of less than 0.500 g/m²/day or less than 0.250 g/m²/day or less than 150 g/m²/day or about 0.131 g/m²/day at 100° F (37.8° C) and 90% relative humidity having a thickness of about 10 mil (254 micron) before being thermoformed. The aforementioned features of the present invention may be achieved by a multilayer film **100** comprising at least 3 or 4 or 5 or 6 or 7 or 8 or 9 or 10 or 11 or 12 or 13 or more layers.

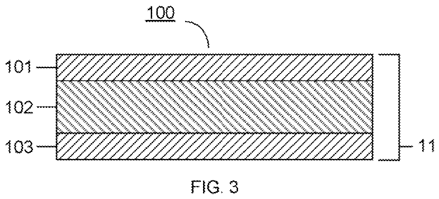

In one embodiment as depicted in FIG. 3, thermoformed blister component **11** comprises a multilayer palindromic film **100** comprises at least a three-layer structure of a first exterior layer **101,** a central core layer **102,** and a second exterior layer **103**. In one embodiment, first and second exterior layers **101** and **103** comprise the same materials. In another embodiment, first and second exterior layers **101** and **103** comprise different materials. In every embodiment, the central core layer **102** comprises high density polyethylene.

For example, in a preferred embodiment, thermoformed blister component **11** comprises a multilayer palindromic film **100** having a first and second exterior layers **101** and **103** each comprising cyclic olefin copolymer (COC). As used herein, the phrase "cyclic olefin copolymer" refers to copolymers having at least one norbornene structural moiety within the repeating backbone of the polymer. Exemplary of commercially available cyclic olefin copolymers include, but are not limited to, the TOPAS^{®} family of resins which is supplied by Celanese Corporation (Irving, TX, USA). Suitable COCs for use in the present invention may have a heat deflection temperature under load (0.45 MPa) of about 75° C or 130° C or 150° C, or 170° C. First and second exterior layers **101** and **103** may each comprises at least 50% or at least 60% or at least 70% or at least 80% or at least 90% or at least 95% cyclic olefin copolymer (COC) relative to the total weight of the layer. In this embodiment, the central core layer **102** comprises a high density polyethylene (HOPE).

As used herein, the phrase "high density polyethylene" or "HOPE" refers to homopolymers of ethylene that have densities of about 0.960 g/cm³ to about 0.970 g/cm³ as well as copolymers of ethylene and an alpha-olefin (such as 1-butene or 1-hexene) that have densities of about 0.940 g/cm³ to about 0.958 g/cm³. In contrast, a low density polyethylene (LDPE) generally has a density of about 0.915 g/cm³ to about 0.930 g/cm³. HDPE is inclusive of polymers made with Ziegler or Phillips type catalysts and polymers made with single-site metallocene catalysts. A non-limiting example of high density polyethylene includes Alathon^{®} M6020 from Equistar Chemicals LP (Houston, Tex.). Other specific non-limiting examples of HDPE include Alathon^{®} M6020 available from Equistar Chemicals LP (Houston, Tex.); Alathon^{®} L5885 available from Equistar Chemicals LP (Houston, Tex.); ExxonMobil^{™} HDPE HD 7925.30 available from ExxonMobil Chemical Company (Houston, Tex.); and ExxonMobil^{™} HDPE HD 7845.30 available from ExxonMobil Chemical Company (Houston, Tex.).

In another preferred embodiment, thermoformed blister component **11** comprises a multilayer palindromic film **100** having first and second exterior layers **101** and **103** each comprising cyclic olefin copolymer (COC), and a central core layer **102** comprising a high density polyethylene and a high density polyethylene nucleation additive. As used herein, the phrase "nucleation additive" means a material that increases high density polyethylene crystallinity as a result of its incorporation into HOPE. Such nucleation additives typically provide better control over crystallization rates. Examples of nucleation additives include minerals such as chalk, talc, clay, kaolin, silicates and the like, and organic agents such as salts of aliphatic or aromatic carboxylic acids, aromatic salts, metallic salts of aromatic phosphorous compounds, quinaridones, and aromatic amides. Further examples include zinc glycerolate, calcium glycerolate, calcium hexahydrophthalate, zinc hexahydrophthalate, salts and the like, and mixtures thereof. In one embodiment, the nucleation additive comprises calcium hexahydrophthalate. In one embodiment, the nucleation additive is present in each interior layer of HDPE from about 0.2% to about 3.5% by weight of the layer.

In another preferred embodiment, thermoformed blister component **11** comprises a multilayer palindromic film **100** having first and second exterior layers **101** and **103** each comprising cyclic olefin copolymer (COC), and a central core layer **102** comprising a high density polyethylene, a high density polyethylene nucleation additive and optionally, a hydrocarbon resin.

As used herein, the phrase "hydrocarbon resin" refers to a product produced by polymerization from coal tar, petroleum, and turpentine feed stocks, as defined by ISO Standard 472, "Plastics - Vocabulary" incorporated by reference herein to the extent that it teaches hydrocarbon resins. The hydrocarbon resin may be present in central core layer **102** from about 3% to about 16% by weight of the layer. A hydrocarbon resin may comprise any of those hydrocarbon resins disclosed in U.S. Pat. No. 6,432,496, issued Aug. 13, 2002, or in US Patent Application 2008/0286547, published Nov. 20, 2008. More specifically, as a non-limiting example, the hydrocarbon resin may include petroleum resins, terpene resins, styrene resins, cyclopentadiene resins, saturated alicyclic resins or mixtures of such resins. Additionally, as a non-limiting example, the hydrocarbon resin may comprise hydrocarbon resin derived from the polymerization of olefin feeds rich in dicyclopentadiene (DCPD), from the polymerization of olefin feeds produced in the petroleum cracking process (such as crude C₉ feed streams), from the polymerization of pure monomers (such as styrene, α-methylstyrene, 4-methylstyrene, vinyltoluene or any combination of these or similar pure monomer feedstocks), from the polymerization of terpene olefins (such as α-pinene, β-pinene or d-limonene) or from a combination of such. The hydrocarbon resin may be fully or partially hydrogenated. Specific examples of hydrocarbon resins include but are not limited to Plastolyn^{®} R1140 Hydrocarbon Resin available from Eastman Chemical Company (Kingsport, Tenn.), Regalite^{®} T1140 available from Eastman Chemical Company (Kingsport, Tenn.), Arkon^{®} P-140 available from Arakawa Chemical Industries, Limited (Osaka, Japan) and Piccolyte^{®} S135 Polyterpene Resins available from Hercules Incorporated (Wilmington, Del.). It should be understood that the central core layer of high density polyethylene may include a blend of high density polyethylene and a hydrocarbon resin with no high density polyethylene nucleation additive present.

In another preferred embodiment, thermoformed blister component **11** comprises a multilayer non-palindromic film **100** having a first exterior layer **101** comprising cyclic olefin copolymer (COC), a second exterior layer **103** comprising a material which is different than first exterior layer **101** and is a material selected from the group consisting of polypropylene (PP), polystyrenes such as, but not limited to, high impact polystyrene (HIPS), general purpose polystyrene (GPPS), and styrene block copolymer (SBC), aromatic polyesters such as, but not limited to, polyethylene terephthalate (PET), oriented polyethylene terephthalate (OPET), amorphous polyethylene terephthalate (APET), glycol-modified polyethylene terephthalate (PETG) and aliphatic polyesters such as, but not limited to, polylactic acid (PLA); polyhydroxyalkonates including but not limited to polyhydroxypropionate, poly(3-hydroxybutyrate) (PH3B), poly(3-hydroxyvalerate) (PH3V), poly(4-hydroxybutyrate) (PH4B), poly(4-hydroxyvalerate) (PH4V), poly(5-hydroxyvalerate) (PH5V), poly(6-hydroxydodecanoate) (PH6D); and a central core layer **102** comprising a blend of high density polyethylene, a high density polyethylene nucleation additive, and optionally, a hydrocarbon resin (HDPE-Blend),

In another preferred embodiment, thermoformed blister component **11** comprises a multilayer non-palindromic film **100** having a first exterior layer **101** comprising cyclic olefin copolymer (COC), a second exterior layer **103** comprising a material which is different than first exterior layer **101** and is a material selected from the group consisting of polypropylene (PP), polystyrenes such as, but not limited to, high impact polystyrene (HIPS), general purpose polystyrene (GPPS), and styrene block copolymer (SBC), aromatic polyesters such as, but not limited to, polyethylene terephthalate (PET), oriented polyethylene terephthalate (OPET), amorphous polyethylene terephthalate (APET), glycol-modified polyethylene terephthalate (PETG) and aliphatic polyesters such as, but not limited to, polylactic acid (PLA); polyhydroxyalkonates including but not limited to polyhydroxypropionate, poly(3-hydroxybutyrate) (PH3B), poly(3-hydroxyvalerate) (PH3V), poly(4-hydroxybutyrate) (PH4B), poly(4-hydroxyvalerate) (PH4V), poly(5-hydroxyvalerate) (PH5V), poly(6-hydroxydodecanoate) (PH6D); and a central core layer **102** comprising a high density polyethylene having a bi-modal molecular weight distribution of a low molecular weight region and a high molecular weight region (HOPE-Bimodal),

As used throughout this application, the term "polypropylene" refers to a homopolymer or copolymer having a propyl or C-3 linkage between monomer units. A non-limiting example of a suitable propylene copolymer is Propylene 4170 available from Total Petrochemicals USA, Inc. (Houston, Tex.). Other non-limiting examples of polypropylenes include Polypropylene 3287WZ, which is available from Total Petrochemicals USA, Inc. (Houston, Tex.); and H02C-00 Polypropylene Homopolymer, which is available from Ineos Olefins & Polymers USA (League City, Tex.).

As used throughout this application, the term "polyester" refers to a homopolymer or copolymer having an ester linkage between monomer units which may be formed, for example, by condensation polymerization reactions between a dicarboxylic acid and a diol. The ester linkage can be represented by the general formula: [O-R-OC(O)-R'-C(O)]ₙ. where R and R' are the same or different alkyl (or aryl) group and may be generally formed from the polymerization of dicarboxylic acid and diol monomers containing both carboxylic acid and hydroxyl moieties. The dicarboxylic acid (including the carboxylic acid moieties) may be linear or aliphatic (e.g., lactic acid, oxalic acid, maleic acid, succinic acid, glutaric acid, adipic acid, pimelic acid, suberic acid, azelaic acid, sebacic acid, and the like) or may be aromatic or alkyl substituted aromatic (e.g., various isomers of phthalic acid, such as paraphthalic acid (or terephthalic acid), isophthalic acid and naphthalic acid). Specific examples of a useful diol include but are not limited to ethylene glycol, propylene glycol, trimethylene glycol, 1,4-butane diol, neopentyl glycol, cyclohexane diol and the like. Polyesters may include a homopolymer or copolymer of alkyl-aromatic esters including but not limited to polyethylene terephthalate (PET), amorphous polyethylene terephthalate (APET), crystalline polyethylene terephthalate (CPET), glycol-modified polyethylene terephthalate (PETG) and polybutylene terephthalate; a copolymer of terephthalate and isophthalate including but not limited to polyethylene terephthalate/isophthalate copolymer. Aliphatic polyesters include but not limited to polylactic acid (PLA); polyhydroxyalkonates including but not limited to poly hydroxy propionate, poly(3-hydroxybutyrate) (PH3B), poly(3-hydroxyvalerate) (PH3V), poly(4-hydroxybutyrate) (PH4B), poly(4-hydroxyvalerate) (PH4V), poly(5-hydroxyvalerate) (PH5V), poly(6-hydroxydodecanoate) (PH6D); and blends of any of these materials. A non-limiting example of PETG is Eastar^{™} Copolyester 6763, which is also available from Eastman Chemical Company (Kingsport, Tenn.).

As used herein, the term "polylactic acid" is used synonymously throughout this disclosure to describe homopolymers or copolymers having an ester linkage between monomer units and can be represented by the general formula: [-OCH(R)C(O)-]ₙ where R=CH₃. Polylactic acid may be fabricated by polymerizing lactic acid, which is mostly produced from by carbohydrate fermentation of corn. Polylactic acid may be also produced by polymerization of lactide which obtained by condensation of two lactic acid molecules. Polylactic acid has a glass transition temperature of ranges from 50-80° C. while the melting temperature ranges from 130-180° C. Polylactic acid is known by those skilled in the art and fully disclosed in U.S. Pat. Nos. 5,698,322; 5,142,023; 5,760,144; 5,593,778; 5,807,973; and 5,010,145. Examples of commercially available polylactic acid are sold under the trademark NatureWorks^{™} PLA Polymer in grades 4031-D, 4032-D, and 4041-D from Cargill Dow LLC, Minneapolis, Minn., U.S.A.

As used throughout this application the term "polystyrene" or "PS" refers to a homopolymer or copolymer having at least one styrene repeating linkage (such as benzene (i.e., C₆H₅) having an ethylene substituent) within the repeating backbone of the polymer. The styrene linkage can be represented by the general formula: [CH₂-CH₂ (C₆H₅)]ₙ. Polystyrene may be formed by any method known to those skilled in the art. Examples of styrenic polymers include but are not limited to high impact polystyrene (HIPS), general purpose polystyrene (GPPS) and styrene block copolymer (SBC). HIPS is sometimes called rubber-modified polystyrene and is normally produced by copolymerization of styrene and a synthetic rubber. (See Wagner, et al., "Polystyrene," The Wiley Encyclopedia of Packaging Technology, Second Edition, 1997, pp. 768-771 (John Wiley & Sons, Inc., New York, New York). Examples of HIPS include but are not limited to Impact Polystyrene 825E and Impact Polystyrene 945E, both of which are available from Total Petrochemicals USA, Inc; EB6025 Rubber Modified High Impact Polystyrene, which is available from Chevron Phillips Company (The Woodlands, Texas); and 6210 High Impact Polystyrene, which is available from Ineos Nova LLC (Channahon, Illinois). GPPS is often called crystal polystyrene, as a reference to the clarity of the resin. Examples of GPPS include but are not limited to Crystal Polystyrene 524B and Crystal Polystyrene 525B, both of which are available from Total Petrochemicals USA, Inc. Styrene block copolymers (SBC) include styrene butadiene copolymers (SB). The styrene-butadiene copolymers that are suitable for packaging applications are those resinous block copolymers that typically contain a greater proportion of styrene than butadiene and that are predominantly polymodal with respect to molecular weight distribution. (See Hartsock, "Styrene-Butadiene Copolymers," The Wiley Encyclopedia of Packaging Technology, Second Edition, 1997, pp. 863-864 (John Wiley & Sons, Inc., New York, New York). A non-limiting example of SB is DK13 K-Resin^{®} Styrene-Butadiene Copolymer, which is available from Chevron Phillips Chemical Company (The Woodlands, Texas).

In still another preferred embodiment, thermoformed blister component **11** comprises a multilayer non-palindromic film **100** having a first exterior layer **101** comprising cyclic olefin copolymer (COC), a second exterior layer **103** comprising a material which is different than first exterior layer **101** and is selected from the group consisting of polypropylene (PP), high impact polystyrene (HIPS), general purpose polystyrene (GPPS), styrene block copolymer (SBC), polyethylene terephthalate (PET), oriented polyethylene terephthalate (OPET), amorphous polyethylene terephthalate (APET), glycol-modified polyethylene terephthalate (PETG) and polylactic acid (PLA), and a central core layer **102** comprising a high density polyethylene having a thickness of between 50 µm to 254 µm (2 mil to 10 mil).

These three-layer embodiments described above may include, but are not limited to the following layer sequences and general layer compositions: COC / HDPE / COC; COC / HDPE-Blend / COC; COC / HDPE-Bimodal / COC; COC / HDPE / PP; COC / HDPE-Blend / PP; COC / HDPE-Bimodal / PP; COC / HDPE / PETG; COC / HDPE-Blend / PETG; COC / HDPE-Bimodal / PETG; COC / HOPE / APET; COC / HDPE-Blend / APET; COC / HDPE-Bimodal / APET; COC / HDPE / PET; COC / HDPE-Blend / PET; COC / HDPE-Bimodal / PET; COC / HDPE / OPET; COC / HDPE-Blend / OPET; COC / HDPE-Bimodal / OPET; COC / HDPE / PLA; COC / HDPE-Blend / PLA; COC / HDPE-Bimodal J PLA; COC / HDPE / HIPS; COC / HDPE-Blend / HIPS; COC / HDPE-Bimodal / HIPS; COC / HOPE / GPPS; COC / HDPE-Blend / GPPS; COC / HDPE-Bimodal / GPPS; COC / HDPE / SBC; COC / HDPE-Blend / SBC; and COC / HOPE-Bimodal / SBC.

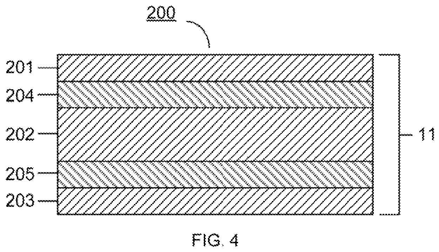

In another generic embodiment as depicted in FIG. 4, thermoformed blister component **11** comprises a multilayer film **200** comprises a five-layer symmetrical structure of a first exterior layer **201**, a central core layer **202,** a second exterior layer **203,** and two interior layers **204** and **205** each positioned between an exterior layer and the central core layer. In this embodiment, first and second exterior layers **201** and **203** each comprise a cyclic olefin copolymer (COC) as described above for layer **101** and **103** for film **100**, Central core layer **202** comprises a high density polyethylene (HOPE) or a blend of a high density polyethylene, a high density polyethylene nucleation additive and optionally, a hydrocarbon resin (HDPE-Blend), or a high density polyethylene where the core layer has a thickness of between 50 µm to 254 µm (2 mil to 10 mil), or a high density polyethylene having a bi-modal molecular weight distribution of a low molecular weight region and a high molecular weight region as described above for central core layer **102** for film **100**. interior layers **204** and **205** each comprise a tie layer material (tie) which bonds the exterior layers to the central core layer.

It should be understood that the phrase "tie layer material" may include, but not limited to, unmodified polyolefins such as polyethylenes and ethylene vinyl acetate copolymers, unmodified ester copolymers such as ethylene acrylate copolymers and ethylene methacrylate copolymers and unmodified ethylene acid copolymers such as ethylene acrylic acid copolymers and blends thereof. Tie layer materials may also include modified polyolefins including, but not limited to anhydride modified polyethylenes, anhydride modified ethylene vinyl acetate copolymers, modified ester copolymers such as anhydride modified ethylene acrylate copolymers, modified ethylene acid copolymers such as anhydride modified ethylene acrylic acid copolymers and blends thereof. Tie layer materials may further include a blend of an unmodified polyolefin or unmodified ester copolymer or unmodified ethylene acid copolymer and a modified polyolefin or modified ester copolymer or modified ethylene acid copolymer.

In another generic embodiment as depicted in FIG. 4, thermoformed blister component **11** comprises a multilayer film **200** comprises a five-layer non-symmetrical structure of a first exterior layer **201**, a central core layer **202,** a second exterior layer **203**, and two interior layers **204** and **205** each positioned between an exterior layer and the central core layer. In this embodiment, the first exterior layer **201** comprises a cyclic olefin copolymer (COC), the second exterior layer **203** comprising a different material than first exterior layer **201** which is selected from the group consisting of polypropylene (PP), high impact polystyrene (HIPS), general purpose polystyrene (GPPS), styrene block copolymer (SBC), polyethylene terephthalate (PET), oriented polyethylene terephthalate (OPET), amorphous polyethylene terephthalate (APET), glycol-modified polyethylene terephthalate (PETG) and polylactic acid (PLA), central core layer **202** comprises a blend of high density polyethylene, high density polyethylene nucleation additive and optionally, a hydrocarbon resin (HDPE-Blend), and two interior layers **204** and **205** each comprising a tie layer material.

In still another generic embodiment as depicted in FIG. 4, thermoformed blister component **11** comprises a multilayer film **200** comprises a five-layer non-symmetrical structure of a first exterior layer **201,** a central core layer **202,** a second exterior layer **203,** and two interior layers **204** and **205** each positioned between an exterior layer and the central core layer. In this embodiment, first exterior layer **201** comprises a cyclic olefin copolymer (COC), a second exterior layer **203** comprising a different material than first exterior layer **201** which is selected from the group consisting of polypropylene (PP), high impact polystyrene (HIPS), general purpose polystyrene (GPPS), styrene block copolymer (SBC), polyethylene terephthalate (PET), oriented polyethylene terephthalate (OPET), amorphous polyethylene terephthalate (APET), glycol-modified polyethylene terephthalate (PETG) and polylactic acid (PLA), central core layer **202** comprises a high density polyethylene having a thickness of between 50 µm to 254 µm (2 mil to 10 mil), and two interior layers **204** and **205** each comprising a tie layer material.

In still another generic embodiment as depicted in FIG. 4, thermoformed blister component **11** comprises a multilayer film **200** comprises a five-layer non-symmetrical structure of a first exterior layer **201,** a central core layer **202,** a second exterior layer **203,** and two interior layers **204** and **205** each positioned between an exterior layer and the central core layer. In this embodiment, first exterior layer **201** comprises a cyclic olefin copolymer (COC), a second exterior layer **203** comprising a different material than first exterior layer 201 which is selected from the group consisting of polypropylene (PP), high impact polystyrene (HIPS), general purpose polystyrene (GPPS), styrene block copolymer (SBC), polyethylene terephthalate (PET), oriented polyethylene terephthalate (OPET), amorphous polyethylene terephthalate (APET), glycol-modified polyethylene terephthalate (PETG) and polylactic acid (PLA), central core layer **202** comprises a bi-modal high density polyethylene having a molecular weight distribution of a low molecular weight region and a high molecular weight region (HDPE-Bimodal), and two interior layers **204** and **205** each comprising a tie layer material.

These five-layer embodiments described above may include, but are not limited to the following layer sequences and general layer compositions: COC / tie / HOPE / tie / COC; COC / tie / HDPE-Blend / tie / COC; COC/ tie / HDPE-Bimodal / tie / COC; COC / tie / HDPE / tie / PP; COC / tie / HDPE-Blend / tie IPP; COC / tie / HDPE-Bimodal / tie / PP; COC / tie / HDPE / tie / PETG; COC / tie / HDPE-Blend / tie / PETG; COC / tie / HDPE-Bimodal / tie / PETG; COC / tie / HDPE / tie / APET; COC / tie / HDPE-Blend / tie / APET; COC / tie / HDPE-Bimodal / tie / APET; COC / tie / HDPE / tie / PET; COC / tie / HDPE-Blend / tie / PET; COC / tie / HOPE-Bimodal / tie / PET; COC / tie / HDPE / tie / OPET; COC / tie / HDPE-Blend / tie / OPET; COC / tie / HOPE-Bimodal / tie / OPET; COC I tie / HDPE / tie / PLA; COC / tie / HDPE-Blend / tie / PLA; COC / tie / HOPE-Bimodal / tie / PLA; COC / tie / HDPE I tie / HIPS; COC / tie / HDPE-Blend / tie / HIPS; COC / tie / HDPE-Bimodal / tie / HIPS; COC / tie / HDPE / tie / GPPS; COC / tie / HDPE-Blend / tie / GPPS; COC / tie / HDPE-Bimodal / tie / GPPS; COC / tie / HOPE / tie / SBC; COC / tie / HDPE-Blend / tie / SBC; and COC / tie / HDPE-Bimodal / tie / SBC.

Those skilled in the art will recognize that a tie layer material may not be needed to bond a cyclic olefin copolymer (COC) to a high density polyethylene. Therefore, while the above examples illustrate symmetrical film structures having at least five layers, a tie layer between cyclic olefin copolymer (COC) and high density polyethylene may be omitted and thus, four-layer film structures can be formed as well.

It should be understood that in the above-described generic embodiments, the thermoformed blister component may include additional film layers.

While it should be understood that each film layer of films **100** and **200** may each have any thickness as desired, it is preferable that the thickness of each of the central core layer layers **102** and **202** is at least 40% or at least 45% or at least 50%, or at least 55%, or at least 60%, or at least 65% of the total thickness of the palindromic thermoplastic films **100** and **200,** respectively.

The total thickness of multilayer films of the thermoformed blister component **11** of the present invention is generally from about 12.7 µm (0.5 mil) to about 508 µm (20 mil), typically from about 50.8 µm (2 mil) to about 254 µm (10 mil), most typically from about 76.2 µm (3 mil) to about 203.2 µm (8 mil).

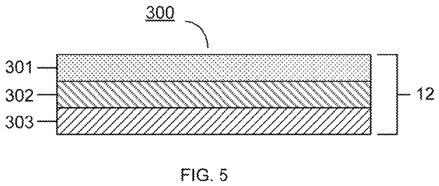

In accordance with the practice of the present invention, one embodiment of a lidding component **12** of the present invention is depicted in FIG. 5, In this embodiment, lidding component **12** comprises a laminate **300** having a first exterior layer **301,** an interior layer **302** and a second exterior layer **303.** Preferably, second exterior layer **303** comprises a thermoplastic resin heat-sealable to cyclic olefin copolymer, first exterior layer **301** comprises a metal foil such as aluminum, and interior layer **302** comprises a tie or adhesive material bonding exterior layers **301** and **303** together.

### WORKING EXAMPLES

### THERMOFORMED BLISTER COMPONENT-PALINDROMIC FILM EXAMPLES

The following example illustrates a certain particular embodiment of palindromic film structure suitable for use in the present invention and is not to be interpreted as limiting. In the following example, polymeric resin composition percentages are based on the total weight of each film layer. In the following example, the film structure was produced using a single-bubble coextrusion apparatus and method which are well known to those skilled in the art. The single-bubble blown coextrusion film apparatus included a multi-manifold circular die head for bubble blown film through which a non-palindromic film composition was forced through and formed into a cylindrical bubble. The film bubble was immediately quenched e.g., via cooled water bath, solid surface and/or air, and then ultimately collapsed onto itself and formed into a palindromic film.

### Example 1-1

Example 1-1 is one embodiment of a palindromic thermoplastic film **200** as illustrated in FIG. 4 having a structure and layer compositions as described below:

Layer **201** was 100% by weight of a cyclic olefin copolymer (COC) having density of 1010 kg/m3, a heat deflection temperature under load (0.45 MPa) of about 75° C and a glass transition temperature of 130° C. Exemplary of such a commercially available COC is TOPAS^{®} 6013F-04 supplied by Celanese Corporation (Irving, TX, USA). This layer had a thickness of approximately 36.2 µm (1.4 mil).

Layer **204** was a blend of 80% by weight of a maleic anhydride modified ethylene elastomer and 20% by weight of a high density polyethylene (HOPE). Exemplary of a commercially available maleic anhydride modified ethylene elastomer is ADMER^{®} SE810 having a density of 0.89 g/cm³ and a melt flow index (190° C/2.16 kg) of 7.2 g/ 10 min supplied by Mitsui Chemicals America, Inc. (Rye Brook, NY, USA). Exemplary of a commercially available HDPE is SURPASS^{®} HP167-AB supplied by Nova Chemical Company (Joffre, Alberta, Canada). SURPASS^{®} HP167-AB is believed to be an example of a bimodal high density polyethylene having a distribution of a low molecular weight region and a high molecular weight region. Exemplary of a commercially available high density polyethylene is POLYBATCH^{®} CLR 124 supplied by A. Schulman (Fairlawn, OH, USA). This layer had a thickness of approximately 6.0 µm (0.24 mil).

Layer **202** was 100% by weight a high density polyethylene (HOPE). This layer had a thickness of approximately 156.8 µm (6.18 mil).

Layer **205** was a blend of 80% by weight of a maleic anhydride modified ethylene elastomer and 20% by weight of a high density polyethylene (HOPE). This layer had a thickness of approximately 6.0 µm (0.24 mil).

Layer **203** was 100% by weight of a cyclic olefin copolymer (COC) having density of 1010 kg/m3, a heat deflection temperature under load (0.45 MPa) of about 75° C and a glass transition temperature of 130° C. Exemplary of such a commercially available COC is TOPAS^{®} 6013F-04 supplied by Celanese Corporation (Irving, TX, USA). This layer had a thickness of approximately 36.2 µm (1.4 mil).

The film as described above had a total thickness of approximately 241.3 µm (9.5 mil).

### Example 1-2

Example 1-2 is another embodiment of a palindromic thermoplastic film **200** as illustrated in FIG. 4 having the same structure and same layer compositions as described above for Example 1 -1, except for the following layer thickness:

Layer **201** had a thickness of 28.7 µm (1.13 mil).

Layer **204** had a thickness of 4.7 µm (0.19 mil).

Layer **202** had a thickness of 124 µm (4.88 mil).

Layer **205** had a thickness of 4.7 µm (0.19 mil).

Layer **203** had a thickness of 28.7 µm (1.13 mil).

The film as described above had a total thickness of approximately 190.5 µm (7.5 mil).

### LIDDING COMPONENT

The following examples illustrate certain particular embodiments of a film for use as a lidding component structure suitable and are not to be interpreted as limiting. In the following examples, polymeric resin composition percentages are based on the total weight of each film layer. In the following examples, the film structures were produced using an extrusion coating apparatus and methods which are well known to those skilled in the art. The extrusion coating apparatus includes a multi-manifold flat die head through which a two-layer film composition was forced and extrusion coated onto the shiny surface of a metallic foil. The metallic foil was pre-treated prior to extrusion coating by printing a primer coat onto the matte surface of the foil.

### Example 2-1

Example 2-1 is one embodiment of a laminate **300** of a lidding component film **12** as illustrated in FIG. 5 having a structure and layer compositions as described below:

Layer **301** was an aluminum foil. This layer had a thickness of approximately 25.4 µm (1 mil).

Layer **302** was 100% by weight of an ethylene acrylic acid copolymer (EAA) having a density of 0.94 g/cm³, a melting point of 78° C, and a melt flow rate (190° C/2.16 kg) of 10 g/10 min. Exemplary of such a commercially available EAA is NUCREL^{®} 3990 supplied by E.I. du Pont de Nemours and Company, Inc. (Wilmington, DE, USA).

Layer **303** (heat-seal layer) was a blend of 86% by weight of a modified ethylene acrylic acid copolymer (mod-EAA) having a density of 1.02 g/cm³, a melting point of 97° C, and a melt flow rate (190° C/2.16 kg) of 13 g/10 min; 10% by weight of a modified ethylene acrylate copolymer (mod-EMA) having a density of 0.94 g/cm3, a melt flow rate (190° C/2.16 kg) of 2.0 g/10 min, and a melting point of 91° C; and 4% of a masterbatch comprising an ethylene methacrylate copolymer (mod-EMA) having a density of 0.94 g/cm³, a melt flow rate (190° C/2.16 kg) of between 3 and 8 g/10 min, and a 1% by weight of a chill roll release additive. Exemplary of such a commercially available mod-EAA having a density of 1.02 g/cm³, a melting point of 97° C, and a melt flow rate (190° C/2.16 kg) of 13 g/10 min is APPEEL^{®} 20D828 supplied by E.I. du Pont de Nemours and Company, Inc. (Wilmington, DE, USA). Exemplary of such a commercially available mod-EMA having a density of 0.94 g/cm3, a melt flow rate (190° C/2.16 kg) of 2.0 g/10 min, and a melting point of 91° C is BYNEL^{®} 22E780 supplied by E.I. du Pont de Nemours and Company, Inc. (Wilmington, DE, USA). Exemplary of such a commercially available masterbatch mod-EMA having a chill roll release additive is Ampacet 100578 Chill Roll Cop MB supplied by Ampacet Corporation, Inc. (Tarrytown, NY, USA).

### Example 2-2

Example 2-2 is another embodiment of a laminate **300** of a lidding component film **12** as illustrated in FIG. 5 having a structure and layer compositions as described below:

Layer **301** and **302** were equivalent to those described above in Example 2-1.

Layer **303** (heat-seal layer) was a blend of 86% by weight of a modified ethylene acrylic acid copolymer (mod-EAA) having a density of 1.02 g/cm³, a melting point of 97° C, and a melt flow rate (190° C/2.16 kg) of 13 g/10 min; 10% by weight of a modified ethylene acrylate copolymer (mod-EMA) having a density of 0.94 g/cm3, a melt flow rate (190° C/2.16 kg) of 2.0 g/10 min, and a melting point of 91° C; and 4% by weight of a masterbatch comprising an ethylene methacrylate copolymer (mod-EMA) having a density of 0.94 g/cm³, a melt flow rate (190° C/2.16 kg) of between 3 and 8 g/10 min, and a 1% by weight of a chill roll release additive. Exemplary of such a commercially available mod-EAA having a density of 1.02 g/cm³, a melting point of 97° C, and a melt flow rate (190° C/2.16 kg) of 13 g/10 min is APPEEL^{®} 20D828 supplied by E.I. du Pont de Nemours and Company, Inc. (Wilmington, DE, USA). Exemplary of such a commercially available mod-EMA having a density of 0.94 g/cm3, a melt flow rate (190° C/2.16 kg) of 2.0 g/10 min, and a melting point of 91° C is BYNEL^{®} 22E780 supplied by E.I. du Pont de Nemours and Company, Inc. (Wilmington, DE, USA). Exemplary of such a commercially available masterbatch mod-EMA having a chill roll release additive is Ampacet 100578 Chill Roll Cop MB supplied by Ampacet Corporation, Inc. (Tarrytown, NY, USA).

### Example 2-3

Example 2-3 is another embodiment of a laminate **300** of a lidding component film **12** as illustrated in FIG. 5 having a structure and layer compositions as described below:

Layer **301** and **302** were equivalent to those described above in Example 2-1.

Layer **303** (heat-seal layer) was a blend of 85% by weight of a modified ethylene acrylic acid copolymer (mod-EAA) having a density of 1.02 g/cm³, a melting point of 97° C, and a melt flow rate (190° C/2.16 kg) of 13 g/10 min; 10% by weight of a modified ethylene acrylate copolymer (mod-EMA) having a density of 0.94 g/cm3, a melt flow rate (190° C/2.16 kg) of 2.0 g/10 min, and a melting point of 91° C; 4% of a masterbatch comprising an ethylene methacrylate copolymer (mod-EMA) having a density of 0.94 g/cm³, a melt flow rate (190° C/2.16 kg) of between 3 and 8 g/10 min, and a 1% by weight of a chill roll release additive: and 1% by weight of a high density polyethylene masterbatch comprising 1% by weight of a high density polyethylene nucleation additive. Exemplary of such a commercially available mod-EAA having a density of 1.02 g/cm³, a melting point of 97° C, and a melt flow rate (190° C/2.16 kg) of 13 g/10 min is APPEEL^{®} 20D828 supplied by E.I. du Pont de Nemours and Company, Inc. (Wilmington, DE, USA). Exemplary of such a commercially available mod-EMA having a density of 0.94 g/cm³, a melt flow rate (190° C/2.16 kg) of 2.0 g/10 min, and a melting point of 91° C is BYNEL^{®} 22E780 supplied by E.I. du Pont de Nemours and Company, Inc. (Wilmington, DE, USA). Exemplary of such a commercially available masterbatch mod-EMA having a chill roll release additive is Ampacet 100578 Chill Roll Cop MB supplied by Ampacet Corporation, Inc. (Tarrytown, NY, USA). Exemplary of such a commercially available masterbatch of a high density polyethylene masterbatch comprising 1% by weight of a high density polyethylene nucleation additive is POLYBATCH^{®} CLR 122 supplied by A. Schulman (Fairlawn, OH, USA),

The blister packages of the present invention can be manufactured using methods known in the art. Generally, the blister cavities are thermoformed from the blister components of the present invention in-line just prior to filling the cavities with a product to be packaged. The lidding component is then unwound from a roll and brought into contact with the formed and filled blister component such that the heat-seal layer of the lidding component contacts the blister component. The lidding and blister components are heat sealed, typically using a heated platen. Some areas of the package may not be sealed to provide a starting point for peeling off the lidding component prior to removing the product. If the lidding component is not pre-printed, printing is generally done just before heat sealing. After heat-sealing, the individual blisters may be perforated using methods known is the art so that they can removed at point of use.

## Claims

1. A blister component for a blister package, comprising:
a multilayer thermoplastic film comprising:
i. two exterior layers comprising a cyclic olefin copolymer (COC); and
ii. a central core layer comprising a high density polyethylene (HDPE).

2. A component according to claim 1, wherein the multilayer thermoplastic film is palindromic.

3. A component according to claim 1, wherein the central core layer comprises a high density polyethylene nucleation additive.

4. A component according to claim 3, wherein the central core layer comprises a hydrocarbon resin.

5. A component according to claim 1, wherein the central core layer has a thickness of between 50 µm to 254 µm (2 mil to 10 mil).

6. A component according to claim 1, wherein the central core layer comprises a bimodal high density polyethylene having a molecular weight distribution of a low molecular weight region and a high molecular weight region,

7. A component according to claim 1, wherein the central core layer is in direct contact with both exterior layers.

8. A component according to claim 1, wherein the multilayer thermoplastic film comprises two interior layers each comprising a blend of a maleic anhydride modified ethylene elastomer and high density polyethylene.

9. A component according to claim 8, wherein each of the two interior layers are in direct contact with an exterior layer.

10. A component according to claim 8, wherein each of the two interior layers are in direct contact with the central core layer.

11. A component according to claim 1, wherein the central core layer has a thickness of at least 40% of the total thickness of the multilayer thermoplastic film.

12. A component according to claim 1, wherein the central core layer has a thickness of at least 50% of the total thickness of the multilayer thermoplastic film.

13. A component according to claim 1, wherein the central core layer has a thickness of at least 60% of the total thickness of the multilayer thermoplastic film.

14. A component according to claim 1, wherein the central core layer has a thickness of at least 75% of the total thickness of the multilayer thermoplastic film.

15. A component according to claims 1 to 14, wherein the multilayer thermoplastic film comprises at least 5 layers.

## Patentansprüche

1. Blisterbestandteil für eine Blisterpackung, umfassend:
eine mehrschichtige thermoplastische Folie, umfassend:
i. zwei Außenschichten, umfassend ein cyclisches Olefincopolymer (COC); und
ii. eine zentrale Kernschicht, umfassend ein Polyethylen mit hoher Dichte (HDPE).

2. Bestandteil nach Anspruch 1, wobei die mehrschichtige thermoplastische Folie palindromisch ist.

3. Bestandteil nach Anspruch 1, wobei die zentrale Kernschicht ein Kristallkeimbildneradditiv für Polyethylen mit hoher Dichte umfasst.

4. Bestandteil nach Anspruch 3, wobei die zentrale Kernschicht ein Kohlenwasserstoffharz umfasst.

5. Bestandteil nach Anspruch 1, wobei die zentrale Kernschicht eine Dicke zwischen 50 µm und 254 µm (2 mil bis 10 mil) aufweist.

6. Bestandteil nach Anspruch 1, wobei die zentrale Kernschicht ein bimodales Polyethylen mit hoher Dichte umfasst, das eine Molekulargewichtverteilung einer Region mit niedrigem Molekulargewicht und einer Region mit hohem Molekulargewicht aufweist.

7. Bestandteil nach Anspruch 1, wobei die zentrale Kernschicht in direktem Kontakt mit beiden Außenschichten ist.

8. Bestandteil nach Anspruch 1, wobei die mehrschichtige thermoplastische Folie zwei Innenschichten umfasst, die jeweils ein Gemisch aus einem mit Maleinsäureanhydrid modifizierten Ethylenelastomer und Polyethylen mit hoher Dichte umfassen.

9. Bestandteil nach Anspruch 8, wobei jede der zwei Innenschichten in direktem Kontakt mit einer Außenschicht ist.

10. Bestandteil nach Anspruch 8, wobei jede der zwei Innenschichten in direktem Kontakt mit der zentralen Kernschicht ist.

11. Bestandteil nach Anspruch 1, wobei die zentrale Kernschicht eine Dicke von mindestens 40 % der Gesamtdicke der mehrschichtigen thermoplastischen Folie hat.

12. Bestandteil nach Anspruch 1, wobei die zentrale Kernschicht eine Dicke von mindestens 50 % der Gesamtdicke der mehrschichtigen thermoplastischen Folie hat.

13. Bestandteil nach Anspruch 1, wobei die zentrale Kernschicht eine Dicke von mindestens 60 % der Gesamtdicke der mehrschichtigen thermoplastischen Folie hat.

14. Bestandteil nach Anspruch 1, wobei die zentrale Kernschicht eine Dicke von mindestens 75 % der Gesamtdicke der mehrschichtigen thermoplastischen Folie hat.

15. Bestandteil nach den Ansprüchen 1 bis 14, wobei die mehrschichtige thermoplastische Folie mindestens 5 Schichten umfasst.

## Revendications

1. Composant blister pour un emballage blister, comprenant :
un film thermoplastique multicouche comprenant :
i. deux couches extérieures comprenant un copolymère d'oléfine cyclique (COC) ; et
ii. une couche centrale comprenant un polyéthylène haute densité (HOPE).

2. Composant selon la revendication 1, dans lequel le film thermoplastique multicouche est palindromique.

3. Composant selon la revendication 1, dans lequel la couche centrale comprend un additif de nucléation de polyéthylène haute densité.

4. Composant selon la revendication 3, dans lequel la couche centrale comprend une résine hydrocarbonée.

5. Composant selon la revendication 1, dans lequel la couche centrale a une épaisseur comprise entre 50 µm et 254 µm (2 mil à 10 mil).

6. Composant selon la revendication 1, dans lequel la couche centrale comprend un polyéthylène haute densité bimodal ayant une distribution de poids moléculaire comportant une région de poids moléculaire faible et une région de poids moléculaire élevé.

7. Composant selon la revendication 1, dans lequel la couche centrale est en contact direct avec les deux couches extérieures.

8. Composant selon la revendication 1, dans lequel le film thermoplastique multicouche comprend deux couches intérieures comprenant chacune un mélange d'élastomère modifié par l'anhydride maléique et de polyéthylène haute densité.

9. Composant selon la revendication 8, dans lequel chacune des deux couches intérieures sont en contact direct avec une couche extérieure.

10. Composant selon la revendication 8, dans lequel chacune des deux couches intérieures sont en contact direct avec la couche centrale.

11. Composant selon la revendication 1, dans lequel la couche centrale a une épaisseur d'au moins 40 % de l'épaisseur totale du film thermoplastique multicouche.

12. Composant selon la revendication 1, dans lequel la couche centrale a une épaisseur d'au moins 50 % de l'épaisseur totale du film thermoplastique multicouche.

13. Composant selon la revendication 1, dans lequel la couche centrale a une épaisseur d'au moins 60 % de l'épaisseur totale du film thermoplastique multicouche.

14. Composant selon la revendication 1, dans lequel la couche centrale a une épaisseur d'au moins 75 % de l'épaisseur totale du film thermoplastique multicouche.

15. Composant selon les revendications 1 à 14, dans lequel le film thermoplastique multicouche comprend au moins 5 couches.
